# EUROPEAN PATENT SPECIFICATION

(11) **EP 3 467 571 B1**
(45) Date of publication and mention of the grant of the patent: **13.05.2020**
(21) Application number: 18198020.2
(22) Date of filing: 01.10.2018
(51) Int. Cl.: G02C 5/14, G02C 5/18

(54) **SPECTACLE TEMPLE WITH ASSEMBLED CORE**
BRILLENBÜGEL MIT MONTIERTEM KERN
BRANCHE DE LUNETTES AYANT UN NOYAU CENTRAL ASSEMBLÉ

(30) Priority: 03.10.2017 IT 201700110470
(43) Date of publication of application: 10.04.2019
(73) Proprietor: Mirage S.p.A., 21040 Venegono Inferiore (VA) (IT)
(72) Inventor: MILONE, Matteo, 21040 VENEGONO INFERIORE VA (IT)
(74) Representative: Faggioni, Carlo Maria

(56) References cited:
- WO-A1-2012/004405
- GB-A- 2 180 664
- US-A- 4 917 479
- US-A- 5 652 635
- US-A1- 2002 047 985
- US-A1- 2012 113 381

## Description

### FIELD OF THE INVENTION

The present invention relates to a spectacle temple equipped with a metal core.

### STATE OF THE PRIOR ART

It is well known that the spectacle frames are made of the most varied materials and are substantially composed by a frame front to which two supporting temples are hinged. Except for the case wherein the temples are made of metal, in every other case it is possible to incorporate into the frame material a rigid core which contributes to the strength and stiffness of the temple. This typically takes place for temple made of plastic materials (injected, moulded or laminated), but also for other materials.

Traditionally, the technique for making stiffened plastic temples provides to first moulding the plastic material body of the bar and subsequently, when the material is still hot and relatively pasty, to longitudinally insert a wire-shaped metal core into the plastic body of the temple. This system, as well as being fast and efficient, allows to automatically obtain also a perfect attachment of the core in the temple body.

Despite the widespread use of this technique, the relative procedure is not so simple and can be completed only with appropriate equipments which retain the components, under preset temperature conditions and defining a precise movement to obtain a correct coupling without defects.

It should also be noticed that the core has a first sharp tip end, to penetrate the temple plastic body more easily, while the second end is shaped so as to be easily anchored to a first hinge component intended to allow rotating connection of the temple to the frame front.

For this purpose - considering that a second cooperating hinge component is fixed or is intended to be fixed to the frame front - a possible mounting method is to fix the second end of the core to the first hinge component, before hot inserting the core in the temple body. This procedure involves using an insertion tool of the core which also grasp the hinge component, with the risk of damaging the latter. A different mounting method is to fix the second end of the core to the hinge component after the core has already been hot-inserted into the temple body: this procedure in turn implies a drawback, due to the fact that the second end connection of the core second end to the hinge component, especially if carried out by welding, implies a risk of damage to the temple.

In any case, when, during prolonged use over time, damage to the hinge component integral with the core occurs, there would be no other solution than throwing away the whole temple and replacing it with a new one.

Alternatively, frames have already been proposed in which the temple body is hollow, and the metal core is simply cold-inserted. However, these systems need to devise some solutions to effectively lock the core in position in the temple - typically by means of elastic mechanisms which also determine a reaction on the opposite end - with a constructive complexity that concerns both the metallic core and the temple body, which is unpleasant for spectacle manufacturers, since it determines design constraints both on the aesthetics of the spectacle and on the hinges that can be used. They therefore failed in the spectacle productions in large series.

Examples of this type of core are disclosed in WO2007147953, WO201204405, WO2014111422. Other methods for fixing the metal cores in spectacle temples are disclosed in US 5652635, US 4917479, US2012/0113381.

GB2180664A discloses a spectacle temple comprising a main body and a wire core, the latter having both ends threaded in order to screw one end to a hinge part and the other end to an ear-end terminal. US5652635A discloses a spectacle temple comprising a main body and a wire core. The main body is coupled to the hinge and the end terminal by means of tangs inserted in respective seats.

### SUMMARY OF THE INVENTION

The problem underlying the invention is therefore to propose a metal core and temple assembly which overcomes the aforementioned drawbacks of the prior art, in particular which results in a fast and economical mounting, does not excessively constrain the design of the spectacle and its components and allows easy replaceability and maintenance even by unskilled users.

These objects are achieved by the features mentioned in claim 1. The dependent claims describe preferred features of the invention.

In particular, according to a first aspect, a spectacle temple is provided comprising a main body, provided with an inner longitudinal channel, housing a wire stiffening core, and a first free end terminal, wherein
said longitudinal channel and said wire core are substantially rectilinear
said wire core has two threaded ends suitable to couple with respective locking members on said main body,
said first terminal is coupled in a disengageable way with a first end tang of said main body,
a first of said locking members is nut-shaped which is housed in a seat of said first tang, and
a second of said locking members consists of a second terminal member, which is part of hinge means, provided with a threaded hole.

According to an additional aspect, the main body has a second end tang coupled with a recess of said second terminal member.

Preferably, said nut is arranged in an inner cavity of said first terminal which is press coupled with said tang.

According to another aspect, the first terminal is shaped finishing element of the temple, suitable to rest ergonomically on the contour of a user's head and/or ear.

According to a preferred variant, the main body and the first terminal are made of an injectable plastic material, a thermoplastic or wood material or any combinations thereof. The core is typically made of metallic material.

According to another aspect, the second terminal member is fork-shaped with hinge holes.

Optionally, the second terminal member is made of metallic material.

### BRIEF DESCRIPTION OF THE DRAWINGS

Further features and advantages of the invention will anyhow be more evident from the following detailed description of a preferred embodiment, given by mere way of non-limiting example and illustrated in the accompanying drawings, wherein:
figs. 1A and 1B are respectively a side elevation and a front elevation view of an exemplary spectacle temple;
fig. 2 is a see-through exploded view of the temple of fig. 1;
fig. 3 is a plan view of the temple of fig. 1;
fig. 3A is a sectional view according to the line A-A of fig. 3;
fig. 4 is a perspective exploded view of the temple of fig. 1 showing, see-through with dotted lines, its different component parts;
fig. 5 is an enlarged view of the detail B of fig. 4, relative to the free end of the temple; and
fig. 6 is an enlarged view of the detail C of fig. 4, relative to the constraining end of the temple.

### DETAILED DESCRIPTION OF THE PREFERRED EMBODIMENT

As shown in the drawings, the temple according to the present invention consist of a central body 1, essentially rectilinear, a first terminal 2, at the free end of the temple, and a second terminal 3 at the constraining end constraining to an articulation hinge of a frame front (not shown).

These three components can be made of all different materials, but at least the central body 1 is preferably made of a light and aesthetic material, for example of injected plastic, cellulose acetate or even wood.

According to a first fundamental feature of the invention, a rectilinear channel 4 suitable to house a stiffening wire core 5, thus preferably metal, passes through the central body 1, said core 5 also being rectilinear and having at its ends 5a, 5b a thread suitable to couple with corresponding threaded holes provided in small locking members 6a, 6b which will be described below.

According to a further feature of the invention, the main body 1 and the two terminals 2 and 3 are distinct from each other and are suitable to be mounted one on the other, essentially by mutual coupling. For this purpose, the main body 1 has, projecting from its two ends, a first and a second end tang 7 and 8, shaped to fit or engage, in the manner better described below, in corresponding seats provided in the two terminals 2 and 3.

The rectilinear channel 4 passes through the whole main body, including the two end tangs 7 and 8, so that it is open continuously outwardly.

Inside this channel 4, as mentioned, the stiffening core 5 is housed, with its two threaded ends 5a and 5b.

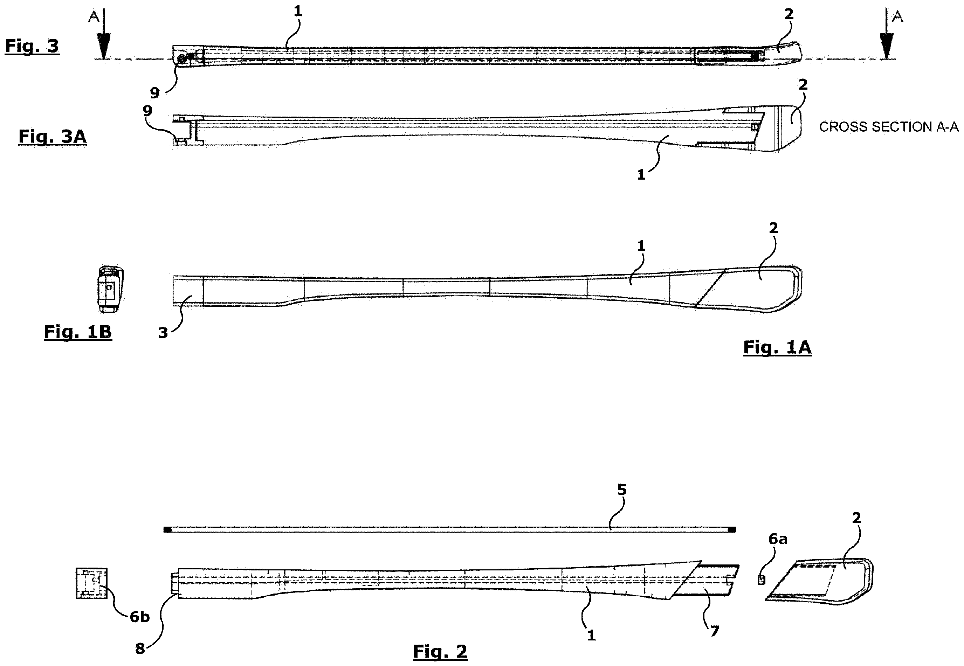

In the embodiment illustrated in fig. 2, one end 5a terminates, from the side of the first terminal 2, in a recessed area 7a of the first tang 7, which acts as a housing seat for a threaded nut 6a. The other end 5b of the core 5 terminates instead, on the side of the second terminal 3, at short distance beyond an head end of the second tang 8.

Advantageously, on the side of the constraining end of the temple, the second terminal 3 is shaped as a solid constraint fork 9, preferably made of metal (possibly manufactured with MIM technology), in which a recess 3a is provided, in which the corresponding second tang 8 engages and in which a threaded hole 6b is obtained which acts as a locking member for the core 5.

In summary, while the second terminal 3 at the constraining end of the temple also acts as a locking member for the core 5, the first terminal 2 is applied to the temple end, as a functional and/or beautifier element, but the core 5 is constrained by an appropriate nut-shaped locking member 5a. The first terminal 2 may have various shapes (straight, shaped, curved, ...), according to the criteria established by the designer of the frame.

Due to this construction, the temple according to the invention can be assembled very easily, even by non-expert operators, maintaining an easy replaceability of the most significant components.

For the assembly, it is preferably provided to first assembly the core 5 with the second terminal 3 on the constraining side, screwing the threaded end 5b into the threaded hole 6b which acts as a locking member. Then the core 5 is inserted into the rectilinear channel 4 of the temple, until the recess 3a engages the second tang 8. The core is then finally locked onto the central body 1 by screwing the nut 6a onto the threaded end 5a of the core; the nut 6a is accommodated in the cavity 7a of the first tang 7. By appropriately tightening the nut 6a, it is possible to tension the core on the main body 1 until a good overall stiffening of the temple is achieved.

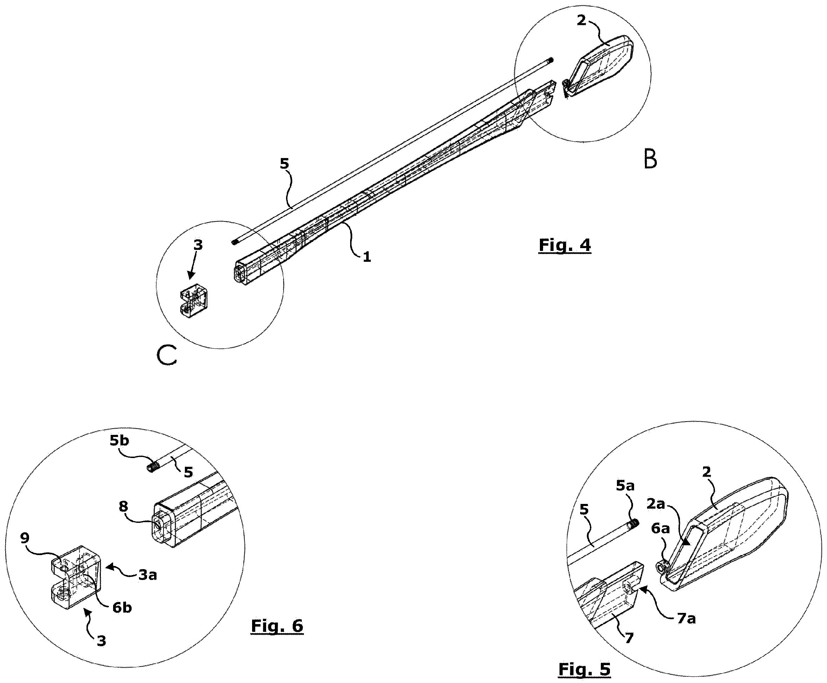

Finally, the first terminal 2 can be coupled on the first tang 7 of the free end of the temple. For this purpose, the first terminal 2 has an axial cavity 2a which - as shown in fig. 5 - is intended to accommodate the first tang 7. Such a housing is made accurately, such that the first tang 7 can be engaged therein slightly forced, preferably without any bonding or other definitive anchoring system needed.

It should be noted that the axial cavity 2a of the first terminal 2 is capable of housing not only the first tang 7 but, as already mentioned above, also the tensioning nut 6a of the temple 4, which is embedded in the cavity 7a of the first tang 7 itself.

The first terminal 2 is an essentially finishing element of the temple, which may have - as also represented in detail B of fig. 5 - an elongated and arched shape. Such a shape is designed to be intended to better follow the contour of the head of the person wearing the spectacle; in particular, to follow the contour of the upper part of the ear, so as to constitute a better retention of the spectacle on the head.

The first terminal 2 can be made of the same material as the temple, or of the central body 1; in this case its engagement on the tang 7 will be made with sufficient precision to hide the continuity solution with the central body 1.

Alternatively, for example, to achieve a certain aesthetic effect, the first terminal 2 can be made of a different material, such as an elastomer.

As already seen above, the second terminal element 3 is instead an element designed to perform the technical function of anchoring to the articulation hinge on the spectacle frame. For this purpose, the second terminal 3 has, on one side, the recess 3a intended to accommodate the second tang 8 and, on the other side, incorporates a first hinge member 9, for example a fork with aligned articulation holes.

Also in this case, the housing recess 3a can be accurately made, so that the engagement of the second tang 8 occurs with a slight pressure. However, since the core 5 is coupled directly into the second terminal 3, actually the latter is in any case locked on the main body 1 when the core 5 has been fixed by means of the opposing nut 7a.

As it is understood, the assembly according to the invention achieves perfectly the desired results. With this solution, in fact, it is possible to obtain a rigid temple with few members, simply assembled without using special tools or industrial machines. The assembly can be easily disassembled, decoupling the two locking members 6a and 6b from the core 5, thus allowing easy replacement of the various components without having to dispose of the entire temple in case of partial failure.

It is understood, however, that the invention is not to be considered as limited by the particular arrangement illustrated above, which represents only an exemplary embodiment of the same, but different variants are possible, all within the reach of a person skilled in the art, without departing from the scope of the invention itself, as defined by the following claims.

## Claims

1. Spectacle temple comprising a main body (1), provided with an inner longitudinal channel (4), wherein a wire stiffening core (5) is housed, and a first free end terminal (2), **characterized in that**
said longitudinal channel (4) and said wire core (5) are substantially rectilinear
said wire core (5) has two threaded ends (5a, 5b) suitable to couple with respective locking members (6a, 6b) on said main body (1),
said first terminal (2) is coupled in a disengageable manner with a first end tang (7) of said main body (1),
a first one (6a) of said locking members is in the shape of a first nut which is housed in a seat (7a) of said first tang (7), and
a second one (6b) of said locking members consists of a second terminal member (3), which makes up part of hinge means, provided with a threaded hole.

2. Spectacle temple as in 1, wherein said main body (1) has a second end tang (8) engaged with a recess (3a) of said second terminal member (3).

3. Spectacle temple as in 1 or 2, wherein said first nut (6a) is arranged in an inner cavity (2a) of said first terminal (2) which is press-fitted with said first tang (7).

4. Spectacle temple as in any one of the preceding claims, wherein said first terminal (2) is shaped as a finishing element of the temple, suitable to ergonomically rest on the contour of a user's head and/or ear.

5. Spectacle temple as in any one of the preceding claims, wherein said main body (1) and said first terminal (2) are made of an injectable plastic material, a thermoplastic material or wood or any combinations thereof.

6. Spectacle temple as in any one of the preceding claims, wherein said second terminal member (3) is in the shape of a fork with hinge holes.

7. Spectacle temple as in any one of the preceding claims, wherein said second terminal member (3) is made of a metal material.

8. Spectacle temple as in any one of the preceding claims, wherein said wire stiffening core (5) is made of metal material.

## Patentansprüche

1. Brillenbügel mit einem Hauptkörper (1), der mit einem inneren Längskanal (4) versehen ist, in dem ein Drahtversteifungskern (5) untergebracht ist, und mit einem ersten freien Endanschluss (2), **dadurch gekennzeichnet, dass**
der Längskanal (4) und der Drahtkern (5) im Wesentlichen geradlinig sind,
der genannte Drahtkern (5) zwei Gewindeenden (5a, 5b) hat, die geeignet sind, mit jeweiligen Verriegelungselementen (6a, 6b) auf dem Körper (1) zu koppeln,
wobei der erste Endabschluss (2) in einer lösbaren Weise mit einem ersten Endzapfen (7) des Hauptkörpers gekoppelt ist,
ein erstes (6a) der genannten Verriegelungselemente die Form einer ersten Mutter hat, die in einem Sitz (7a) des ersten Endzapfens (7) untergebracht ist, und
ein zweites (6b) der genannten Verriegelungselemente aus einem zweiten Anschlusselement (3) besteht, das einen Teil eines Scharniermittels bildet und mit einer Gewindebohrung versehen ist.

2. Brillenbügel nach Anspruch 1, wobei der Hauptkörper (1) einen zweiten Endzapfen (8) hat, der mit einer Aussparung (3a) des zweiten Anschlusselements (3) in Eingriff steht.

3. Brillenbügel nach Anspruch 1 oder 2, wobei die erste Mutter (6a) in einem inneren Hohlraum (2a) des ersten Endanschlusses (2), der mit dem ersten Zapfen (7) verpresst ist, angeordnet ist.

4. Brillenbügel wie in einem der vorhergehenden Ansprüche, wobei der erste Anschluss (2) als Abschlusselement des Bügels geformt und geeignet ist, um ergonomisch auf der Kontur eines Kopfs und/oder Ohrs eines Benutzers zu liegen.

5. Brillenbügel wie in einem der vorstehenden Ansprüche, wobei der Hauptkörper (1) und der erste Endanschluss (2) aus einem spritzbaren Kunststoffmaterial, einem thermoplastischen Material oder Holz oder aus beliebigen Kombinationen davon hergestellt sind.

6. Brillenbügel wie in einem der vorstehenden Ansprüche, wobei das zweite Anschlusselement (3) die Form einer Gabel mit Scharnierlöchern hat.

7. Brillenbügel wie in einem der vorstehenden Ansprüche, wobei das zweite Anschlusselement (3) aus einem metallischen Material hergestellt ist.

8. Brillenbügel wie in einem der vorstehenden Ansprüche, wobei der Drahtversteifungskern (5) aus metallischem Material hergestellt ist.

## Revendications

1. Branche de lunettes comprenant un corps principal (1), pourvu d'un conduit longitudinal intérieur (4) dans lequel un noyau de renforcement en fil (5) est logé, et une première extrémité libre (2), **caractérisée en ce que**
le conduit longitudinal (4) et ledit noyau en fil (5) sont sensiblement rectilignes,
ledit noyau en fil (5) a deux extrémités filetées (5a, 5b) aptes à être couplées à des organes de verrouillage respectifs (6a, 6b) sur ledit corps principal (1),
ladite première extrémité (2) est couplée de manière dégageable à un premier tenon d'extrémité (7) dudit corps principal (1),
un premier (6a) desdits organes de verrouillage a la forme d'un premier écrou qui est logé dans un siège (7a) dudit premier tenon (7), et
un deuxième (6b) desdits organes de verrouillage se compose d'un deuxième organe terminal (3), qui forme une partie de moyens d'articulation, pourvu d'un trou fileté.

2. Branche de lunettes comme dans 1, dans laquelle ledit corps principal (1) a un deuxième tenon d'extrémité (8) en prise avec un creux (3a) dudit deuxième organe terminal (3).

3. Branche de lunettes comme dans 1 ou 2, dans laquelle le premier écrou (6a) est disposé dans une cavité intérieure (2a) de ladite première extrémité (2) qui est emmanchée avec le premier tenon (7).

4. Branche de lunettes comme dans l'une quelconque des revendications précédentes, dans laquelle ladite première extrémité (2) est formée comme un élément de finition de la branche, apte à reposer ergonomiquement sur le contour de la tête et/ou de l'oreille d'un utilisateur.

5. Branche de lunettes comme dans l'une quelconque des revendications précédentes, dans laquelle ledit corps principal (1) et ladite première extrémité (2) sont faits d'une matière plastique injectable, d'une matière thermoplastique ou de bois ou de toutes combinaisons de ceux-ci.

6. Branche de lunettes comme dans l'une quelconque des revendications précédentes, dans laquelle ledit deuxième organe terminal (3) a la forme d'une fourche avec des trous d'articulation.

7. Branche de lunettes comme dans l'une quelconque des revendications précédentes, dans laquelle ledit deuxième organe terminal (3) est fait d'une matière métallique.

8. Branche de lunettes comme dans l'une quelconque des revendications précédentes, dans laquelle ledit noyau de renforcement en fil (5) est fait de matière métallique.
